# EUROPEAN PATENT APPLICATION

(11) **EP 1 137 242 A1**
(43) Date of publication of application: **26.09.2001**
(21) Application number: 00440087.5
(22) Date of filing: 24.03.2000
(51) Int. Cl.: H04M 3/493

(54) **Telecommunication system, terminal and network for vocal commanding**

(71) Applicant: ALCATEL, 75008 Paris (FR)
(72) Inventor: Kopp, Dieter, 75428 Illingen (DE)
(74) Representative: van Bommel, Jan Peter

(57) **Abstract**

Known telecommunication systems may either have a vocal commander like a name dialler in a mobile handset or a wired terminal or may have a vocal commander like a name dialler in the network which is coupled to said mobile handset via a mobile connection or to said wired terminal via a wired connection. By using a data connection between handset/terminal and network for allowing vocal commanding like name dialling in the network, the system is more efficient, especially when combined with distributed speech recognition comprising preprocessing in the handset/terminal and final processing in the network.

## Description

The invention relates to a telecommunication system for performing vocal commanding and comprising a terminal for receiving an audio signal and a network coupled to said terminal via a connection, which network comprises a vocal commander for in response to said audio signal generating a command signal.

Such a telecommunication system is for example known in the form of a first telecommunication system in which a user of a wireless terminal has to dial a certain telephone number in response to which a wireless speech connection is set up between said wireless terminal and said network, after which said user generates said audio signal which via said wireless speech connection is sent to said vocal commander like for example a name dialler in said network, which name dialler analyses said audio signal and in response generates a further telephone number defining a further terminal for making a further (wired and/or wireless) connection with a further (wired or wireless) terminal.

Such a telecommunication system is for example known in the form of a second telecommunication system in which a user of a wired (IP) terminal has to dial a certain telephone number in response to which a wired speech connection is set up between said wired terminal and said network, after which said user generates said audio signal which via said wired speech connection is sent to said vocal commander in said network, which vocal commander analyses said audio signal and in response generates a command defining said wired terminal to be connected to a certain (IP) website.

Such a telecommunication system is disadvantageous, inter alia, due to said (wireless/wired) speech connection being used inefficiently.

It is an object of the invention, inter alia, to provide a telecommunication system as described in the preamble, which is more efficient.

Thereto, the telecommunication system according to the invention is characterised in that said connection is a data connection which is set up in response to a set up signal originating from said terminal, which comprises a signal converter for converting said audio signal into a data signal.

By (in said first telecommunication system) setting up a wireless data connection and in said wireless terminal converting said audio signal into said data signal, which data signal is then sent via said wireless data connection to said network to allow said name dialler to analyse said data signal, the telecommunication system according to the invention is more efficient.

By (in said second telecommunication system) setting up a wired data connection and in said wired (IP) terminal converting said audio signal into said data signal, which data signal is then sent via said wired data connection to said network to allow said vocal commander to analyse said data signal, the telecommunication system according to the invention is more efficient.

The invention is based on the insight, inter alia, that for vocal commanding like for example name dialling taking place in the network, a data connection is sufficient for sending vocal commanding information like for example name dialling information from terminal to network.

The invention solves the problem, inter alia, of providing a more efficient telecommunication system.

The term "wireless" comprises for example terms like "mobile" and/or "cordless" and/or "non-wired", and does not exclude the possible use of the Internet Protocol.

The term "wired" comprises for example terms like "analogly wired" and/or "digitally wired" and/or "wired IP", with IP being short for "Internet Protocol".

A first embodiment of the telecommunication system according to the invention is characterised in that said terminal comprises a generator for generating said set up signal in response to at least one of said audio signal and a manual signal.

When generating said set up signal in response to said audio signal, a further (less complex) name dialler is to be located in said terminal, in which case a first (less complex) name dialling process takes place in said terminal and a (more complex) vocal commanding process like for example a second (more complex) name dialling process takes place in said network via said data connection (or in this case the known speech connection). And when generating said set up signal in response to said manual signal, the user either pushes for example a special button or just dialls a predefined telephone number.

A second embodiment of the telecommunication system according to the invention is characterised in that said network comprises a connection converter coupled to said vocal commander for converting said data connection into a speech connnection.

By introducing said connection converter, after the vocal commanding like for example the name dialling in the network has taken place, and said terminal has been connected, communication may take place via said speech connection. This connection converter for example ends said data connection and starts said speech connection, and/or for example changes parameters of said connection in such a way that data is to be exchanged until a first moment in time and speech is to be exchanged from this first moment in time or from a second (later) moment in time etc.

A third embodiment of the telecommunication system according to the invention is characterised in that said signal converter in said terminal comprises a preprocessing unit for preprocessing said audio signal for generating a preprocessed signal, and in that said network comprises a final processing unit for final processing said preprocessed signal for generating a final processed signal.

In this case the telecommunication system according to the invention has the highest efficiency due to combining said data connection with a so-called "Distributed Speech Recognition or DSR" function, as for example described in US 5,809,464 disclosing a dictating mechanism based upon distributed speech recognition. Other documents being related to DSR are for example EP00440016.4 and EP00440057.8.

The invention further relates to a terminal for use in a telecommunication system for performing vocal commanding comprising said terminal for receiving an audio signal and a network coupled to said terminal via a connection, which network comprises a vocal commander for in response to said audio signal generating a command signal.

The terminal according to the invention is characterised in that said connection is a data connection which is set up in response to a set up signal originating from said terminal, which comprises a signal converter for converting said audio signal into a data signal.

A first embodiment of the terminal according to the invention is characterised in that said terminal comprises a generator for generating said set up signal in response to at least one of said audio signal and a manual signal.

A second embodiment of the terminal according to the invention is characterised in that said signal converter in said terminal comprises a preprocessing unit for preprocessing said audio signal for generating a preprocessed signal, and in that said network comprises a final processing unit for final processing said preprocessed signal for generating a final processed signal.

The invention yet further relates to a network comprising at least one of a collection of a base station and a wireless switching center and a switch and a server and a router and a bridge and for use in a telecommunication system for performing vocal commanding comprising a terminal for receiving an audio signal and said network coupled to said terminal via a connection, which network comprises a vocal commander for in response to said audio signal generating a command signal.

The network according to the invention is characterised in that said connection is a data connection which is set up in response to a set up signal originating from said terminal, which comprises a signal converter for converting said audio signal into a data signal.

A first embodiment of the network according to the invention is characterised in that said network comprises a connection converter coupled to said vocal commander for converting said data connection into a speech connnection.

A second embodiment of the network according to the invention is characterised in that said converter in said terminal comprises a preprocessing unit for preprocessing said audio signal for generating a preprocessed signal, and in that said network comprises a final processing unit for final processing said preprocessed signal for generating a final processed signal.

The invention also relates to a method for performing vocal commanding like for example name dialling via a terminal for receiving an audio signal and a network coupled to said terminal via a connection for in response to said audio signal generating a command for for example making a further connection with a further terminal by using a name dialler or for for example making a further connection with a certain (IP) website, which method according to the invention is characterised by setting up said connection in the form of a data connection in response to a set up signal originating from said terminal in which said audio signal is converted into a data signal.

The documents all disclose systems related to DSR, neither one of these documents discloses the telecommunication system according to the invention. All references including further references cited with respect to and/or inside said references are considered to be incorporated in this patent application.

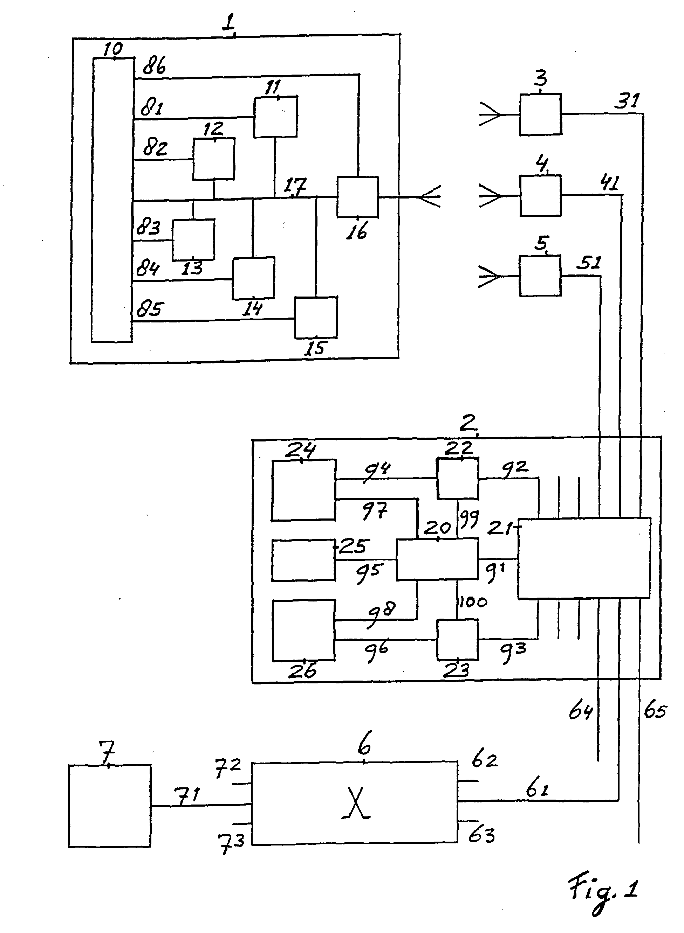

The invention will be further explained at the hand of an embodiment described with respect to a drawing, whereby
figure 1 discloses a telecommunication system according to the invention comprising a terminal according to the invention and a network according to the invention.

The telecommunication system shown in figure 1 comprises a wireless terminal 1 coupled wirelessly to a base station 4 (3,5) which via a connection 41 (31,51) is coupled to a wireless switch 2, which via a connection 61 is coupled to a switch 6, which via a connection 71 is coupled to a wired terminal 7.

Wireless terminal 1 comprises a processor 10 coupled via a bus 17 to a transceiver 16 which is further coupled to an antennae. Processor 10 is further coupled via a control connection 86 to transceiver 16, via a control connection 81 to a man-machine-interface or mmi 11 (comprising a display, keyboard, microphone, loudspeaker etc.) which is further coupled to bus 17, via a control connection 82 to a name dialler 12 which is further coupled to bus 17, via a control connection 83 to a signal converter 13 which is further coupled to bus 17, via a control connection 84 to a preprocessing unit 14 which is further coupled to bus 17, and via a control connection 85 to a memory 15 which is further coupled to bus 17.

Wireless switch 2 comprises a coupler 21 coupled to connections 31,41,51,61,64,65,92,93 etc. and comprises a processor 20 coupled to coupler 21 via a control connection 91 and to a detector/selector 22 via a control connection 99 and to a vocal commander 23 like for example a name dialler via a control connection 100. Detector/delector 22 is further coupled via a connection 94 to a final processing unit 24, which is coupled to processor 20 via a control connection 97. Name dialler 23 is further coupled via a connection 96 to a connection converter 26, which is coupled to processor 20 via a control connection 98. Processor 20 is coupled to a memory 25 via a control connection 95.

The telecommunication system according to the invention as shown in figure 1 and comprising terminal 1 according to the invention and switch 2 according to the invention functions as follows.

According to a first embodiment, a user of wireless terminal 1 pushes one special button or a predefined combination of buttons of mmi 11, which manual action is reported to processor 10 via control connection 81 and which results in a first manual signal flowing from mmi 11 to bus 17. Processor 10 generates in response to said manual action a second manual signal comprising some signalling information which via bus 17 possibly in combination with said first manual signal is sent to transceiver 16, which transmits a set up signal comprising at least a part of said second manual signal comprising said signalling information and/or at least a part of said first manual signal to for example base station 4. In response to the receival of this set up signal, either base station 4 alone (without any communication having taken place between base station 4 and wireless switch 2) or base station 4 together with wireless switch 2 (after communication has taken place between them) will decide that a data connection between base station 4 and wireless terminal 1 is to be set up.

After said data connection has been set up, for example wireless terminal 1 and wireless switch 2 are informed, and said user of wireless terminal 1 for example is invited (in response to an invitation signal which has arrived via said data connection and which via mmi 11 is converted and/or transferred into an audio output and/or a display output) to generate an audio signal via mmi 11 representing a name of a further user to be called. This audio signal flows under control of processor 10 from mmi 11 via bus 17 to signal converter 13, which under control of processor 10 converts said audio signal into a data signal, which data signal under control of processor 10 flows from signal converter 13 via bus 17 to transceiver 16, which under control of processor 10 transmits said data signal via said data connection to base station 4, which sends it via connection 41 to coupler 21 in wireless switch 2.

Via control connection 91, processor 20 is informed of the arrival of said data signal, and controls coupler 21 in such a way that said data signal is supplied to name dialler 23 via connection 93. Name dialler 23 informs processor 20 via control connection 100 of the arrival of said data signal, and comprises for example a data-to-speech converter and a speech recognizer and a database for under control of processor 20 distracting said name of said further user and the corresponding telephone number, in response to which processor 20 is informed and coupler 21 is controlled in such a way that connection 41 is coupled in coupler 21 to connection 61, which via switch 6 is coupled to connection 71 and terminal 7. Then said user of wireless terminal 1 and said further user of terminal 7 may communicate via, inter alia, said data connection between wireless terminal 1 and base station 4 and either a data connection between wireless switch 2 and switch 6 (in which case in switch 6 a reconversion has to take place and a speech connection should be present between switch 6 and terminal 7) or a speech connection between wireless switch 2 and switch 6 and terminal 7 (in which case in wireless switch 2 a reconversion has to take place, for example via said name dialler 23).

According to an alternative to said first embodiment, as described before, said data connection between base station 4 and wireless terminal 1 is set up, and said name of said further user and the corresponding telephone number are distracted, in response to which via connection 96 said connection converter 26 is informed. Connection converter 26 informs processor 20 via control connection 98 that on the one hand a speech connection is to be set up from coupler 21 to terminal 7 via switch 6 and on the other hand said data connection between coupler 21 and wireless terminal 1 via base station 4 is to be converted into a speech connection. Thereto, on the one hand coupler 21 is controlled in such a way that from coupler 21 a speech connection is set up via connection 61 and switch 6 and connection 71 to terminal 7, and on the other hand processor 20 either changes certain parameters of said data connection and/or defining said data connection in such a way that said data connection is converted into a speech connection (said parameters for example defining said user being billed in dependence of an amount of data or in dependence of a lapsed amount of time) or instructs coupler 21 and/or base station 4 and/or wireless terminal 1 to end/disconnect said data connection and to set up a speech connection for example from coupler 21 via connection 41 and base station 4 to wireless terminal 1. Said ending of said data connection and said setting up of said speech connection could be done adjacent or with an overlap or with a "noman's-land" in time. Thereby, said data connection between base station 4 and wireless terminal 1 could be a signalling channel or a signalling part of a speech/data channel used for data, and said speech connection between base station 4 and wireless terminal 1 could be an other or the same speech/data channel now used for speech (whereby the term "speech/data channel" is to be regarded a "speech and/or data channel"). Then said user of wireless terminal 1 and said further user of terminal 7 may communicate via said speech connection between wireless terminal 1 and terminal 7.

According to a second embodiment, a user of wireless terminal 1 pushes for example one special button or a predefined combination of buttons of mmi 11, which manual action is reported to processor 10 via control connection 81, and which results in processor 10 allowing said microphone of mmi 11 to be opened. Then said user (possibly after being invited thereto via said loudspeaker of mmi 11) generates a first audio signal flowing from mmi 11 via bus 17 to name dialler 12 under control of processor 10. This first audio signal for example being "name dialling" and representing said first and/or said second manual signal is converted by name dialler 12 (comprising for example a speech recognizer) and is sent via bus 17 under control of processor 10 to transceiver 16. Processor 10 generates in addition to said first audio signal a further signal comprising some signalling information which via bus 17 possibly in combination with said first audio signal is sent to transceiver 16, which transmits a set up signal comprising at least a part of said further signal comprising said signalling information and/or at least a part of said first audio signal to for example base station 4. In response to the receival of this set up signal, either base station 4 alone (without any communication having taken place between base station 4 and wireless switch 2) or base station 4 together with wireless switch 2 (after communication has taken place between them) will decide that a data connection between base station 4 and wireless terminal 1 is to be set up.

After said data connection has been set up, for example wireless terminal 1 and wireless switch 2 are informed, and said user of wireless terminal 1 for example is invited (in response to an invitation signal which has arrived via said data connection and which via mmi 11 is converted and/or transferred into an audio output and/or a display output) to generate a second audio signal via mmi 11 representing a name of a further user to be called. This second audio signal flows under control of processor 10 from mmi 11 via bus 17 to signal converter 13, which under control of processor 10 converts said second audio signal into a data signal, which data signal under control of processor 10 flows from signal converter 13 via bus 17 to transceiver 16, which under control of processor 10 transmits said data signal via said data connection to base station 4, which sends it via connection 41 to coupler 21 in wireless switch 2.

Via control connection 91, processor 20 is informed of the arrival of said data signal, and controls coupler 21 in such a way that said data signal is supplied to name dialler 23 via connection 93. Name dialler 23 informs processor 20 via control connection 100 of the arrival of said data signal, and comprises for example a data-to-speech converter and a speech recognizer and a database for under control of processor 20 distracting said name of said further user and the corresponding telephone number, in response to which processor 20 is informed and coupler 21 is controlled in such a way that connection 41 is coupled in coupler 21 to connection 61, which via switch 6 is coupled to connection 71 and terminal 7. Then said user of wireless terminal 1 and said further user of terminal 7 may communicate via, inter alia, said data connection between wireless terminal 1 and base station 4 and either a data connection between wireless switch 2 and switch 6 (in which case in switch 6 a reconversion has to take place and a speech connection should be present between switch 6 and terminal 7) or a speech connection between wireless switch 2 and switch 6 and terminal 7 (in which case in wireless switch 2 a reconversion has to take place, for example via said name dialler 23).

According to an alternative to said second embodiment, as described before, said data connection between base station 4 and wireless terminal 1 is set up, and said name of said further user and the corresponding telephone number are distracted, in response to which via connection 96 said connection converter 26 is informed. Connection converter 26 informs processor 20 via control connection 98 that on the one hand a speech connection is to be set up from coupler 21 to terminal 7 via switch 6 and on the other hand said data connection between coupler 21 and wireless terminal 1 via base station 4 is to be converted into a speech connection, etc. as described before. As a result, said user of wireless terminal 1 and said further user of terminal 7 may communicate via said speech connection between wireless terminal 1 and terminal 7.

According to a third embodiment, a user of wireless terminal 1 pushes one special button or a predefined combination of buttons of mmi 11, which manual action is reported to processor 10 via control connection 81 and which results in a first manual signal flowing from mmi 11 to bus 17. Processor 10 generates in response to said manual action a second manual signal comprising some signalling information which via bus 17 possibly in combination with said first manual signal is sent to transceiver 16, which transmits a set up signal comprising at least a part of said second manual signal comprising said signalling information and/or at least a part of said first manual signal to for example base station 4. In response to the receival of this set up signal, either base station 4 alone (without any communication having taken place between base station 4 and wireless switch 2) or base station 4 together with wireless switch 2 (after communication has taken place between them) will decide that a data connection between base station 4 and wireless terminal 1 is to be set up.

After said data connection has been set up, for example wireless terminal 1 and wireless switch 2 are informed, and said user of wireless terminal 1 for example is invited (in response to an invitation signal which has arrived via said data connection and which via mmi 11 is converted and/or transferred into an audio output and/or a display output) to generate an audio signal via mmi 11 representing a name of a further user to be called.

According to a first option, this audio signal flows under control of processor 10 from mmi 11 via bus 17 to preprocessing unit 14, which under control of processor 10 converts said audio signal into a preprocessed signal, which preprocessed signal under control of processor 10 flows from preprocessing unit 14 via bus 17 to transceiver 16, which under control of processor 10 transmits said preprocessed signal via said data connection to base station 4, which sends it via connection 41 to coupler 21 in wireless switch 2.

According to a second option, this audio signal flows under control of processor 10 from mmi 11 via bus 17 to preprocessing unit 14, which under control of processor 10 converts said audio signal into a preprocessed signal, which preprocessed signal under control of processor 10 flows from preprocessing unit 14 via bus 17 to signal converter 13, which converts said preprocessed signal into a preprocessed data signal, which under control of processor 10 flows from signal converter 13 via bus 17 to transceiver 16, which under control of processor 10 transmits said preprocessed data signal via said data connection to base station 4, which sends it via connection 41 to coupler 21 in wireless switch 2.

According to a third option, this audio signal flows under control of processor 10 from mmi 11 via bus 17 to signal converter 13, which converts said audio signal into a data signal, which under control of processor 10 flows from signal converter 13 via bus 17 to preprocessing unit 14, which under control of processor 10 converts said data signal into a preprocessed data signal, which preprocessed data signal under control of processor 10 flows from preprocessing unit 14 via bus 17 to transceiver 16, which under control of processor 10 transmits said preprocessed data signal via said data connection to base station 4, which sends it via connection 41 to coupler 21 in wireless switch 2.

Via control connection 91, processor 20 is informed of the arrival of said preprocessed (data) signal, and controls coupler 21 in such a way that said preprocessed (data) signal is supplied to detector/selector 22 via connection 92, which for example detects and selects a non-preprocessed part and a preprocessed part and sends this preprocessed part via connection 94 to final processing unit 24 under control of processor 20. Final processing unit 24 generates under control of processor 20 a final processed (data) signal which via detector/selector 22 (possibly in combination with said non-preprocessed part) and via connection 92 and coupler 21 and connection 93 under control of processor 20 is supplied to name dialler 23. Name dialler 23 informs processor 20 via control connection 100 of the arrival of said final processed (data) signal, and comprises for example a data-to-speech converter and a speech recognizer and a database for under control of processor 20 distracting said name of said further user and the corresponding telephone number, in response to which processor 20 is informed and coupler 21 is controlled in such a way that connection 41 is coupled in coupler 21 to connection 61, which via switch 6 is coupled to connection 71 and terminal 7. Then said user of wireless terminal 1 and said further user of terminal 7 may communicate via, inter alia, said data connection between wireless terminal 1 and base station 4 and either a data connection between wireless switch 2 and switch 6 (in which case in switch 6 a reconversion has to take place and a speech connection should be present between switch 6 and terminal 7) or a speech connection between wireless switch 2 and switch 6 and terminal 7 (in which case in wireless switch 2 a reconversion has to take place, for example via said name dialler 23). In all cases, either both said preprocessing unit 14 and said final processing unit 24 are used for this communication, or not.

Dependently upon said first, second or third option taking place in wireless terminal 1, in wireless switch 2 said final processing unit 24 will perform final processing and said name dialler 23 will perform name dialling (first option) or at least one of them will in addition also perform some reconversion (second and third option) etc.

According to an alternative to said third embodiment, as described before, said data connection between base station 4 and wireless terminal 1 is set up, and said name of said further user and the corresponding telephone number are distracted, in response to which via connection 96 said connection converter 26 is informed. Connection converter 26 informs processor 20 via control connection 98 that on the one hand a speech connection is to be set up from coupler 21 to terminal 7 via switch 6 and on the other hand said data connection between coupler 21 and wireless terminal 1 via base station 4 is to be converted into a speech connection, etc. as described before. As a result, said user of wireless terminal 1 and said further user of terminal 7 may communicate via said speech connection between wireless terminal 1 and terminal 7. Again, either both said preprocessing unit 14 and said final processing unit 24 are used for this communication, or not.

According to a fourth embodiment, terminal 7 comprises a processor 101 coupled via a bus 170 to a transceiver 160 which is further coupled to connection 71. Processor 101 is further coupled via a control connection 860 to transceiver 160, via a control connection 810 to a man-machine-interface or mmi 110 (comprising a display, keyboard, microphone, loudspeaker etc.) which is further coupled to bus 170, via a control connection 820 to a name dialler 120 which is further coupled to bus 170, via a control connection 830 to a signal converter 130 which is further coupled to bus 170, via a control connection 840 to a preprocessing unit 140 which is further coupled to bus 170, and via a control connection 850 to a memory 150 which is further coupled to bus 170.

Switch 6 comprises a coupler 210 coupled to connections 61,62,63,71,72,73 etc. and comprises a processor 200 coupled to coupler 210 via a control connection 910 and to a detector/selector 220 via a control connection 990 and to a vocal commander 230 via a control connection 1000. Detector/delector 220 is further coupled via a connection 940 to a final processing unit 240, which is coupled to processor 200 via a control connection 970 Vocal commander 230 is further coupled via a connection 960 to a connection converter 260, which is coupled to processor 200 via a control connection 980. Processor 200 is coupled to a memory 250 via a control connection 950.

A user of terminal 7 pushes one special button or a predefined combination of buttons of mmi 110, which manual action is reported to processor 101 via control connection 810 and which results in a first manual signal flowing from mmi 110 to bus 170. Processor 101 generates in response to said manual action a second manual signal comprising some signalling information which via bus 170 possibly in combination with said first manual signal is sent to transceiver 160, which transmits a set up signal comprising at least a part of said second manual signal comprising said signalling information and/or at least a part of said first manual signal to switch 6. In response to the receival of this set up signal, a (possibly IP) data connection is set up between terminal 7 and switch 6.

After said data connection has been set up, for example terminal 7 and switch 6 are informed, and said user of terminal 7 for example is invited (in response to an invitation signal which has arrived via said data connection and which via mmi 110 is converted and/or transferred into an audio output and/or a display output) to generate an audio signal via mmi 110 representing a vocal command, for example defining that said wired terminal is to be connected to a certain (IP) website. This audio signal flows under control of processor 101 from mmi 110 via bus 170 to signal converter 130, which under control of processor 101 converts said audio signal into a data signal, which data signal under control of processor 101 flows from signal converter 130 via bus 170 to transceiver 160, which under control of processor 101 transmits said data signal via said data connection to coupler 210 in switch 6.

Via control connection 910, processor 200 is informed of the arrival of said data signal, and controls coupler 210 in such a way that said data signal is supplied to vocal commander 230 via connection 930. Vocal commander 230 informs processor 200 via control connection 1000 of the arrival of said data signal, and comprises for example a data-to-speech converter and a speech recognizer and a database for under control of processor 200 distracting said command and the corresponding website address, in response to which processor 200 is informed and coupler 210 is controlled in such a way that connection 71 is coupled in coupler 210 to for example connection 63, which gives access to said website. Then said user of terminal 7 may receive said website information via, inter alia, said data connection.

According to a first alternative to said fourth embodiment, as described before, said (possibly IP) data connection between switch 6 and terminal 7 is set up, and said command and said website address are distracted, in response to which via connection 960 said connection converter 260 is informed. Connection converter 26 informs processor 200 via control connection 980 that on the one hand a further data connection is to be set up from coupler 210 to said website and on the other hand said data connection between coupler 210 and terminal 7 is to be converted into a speech connection (due to said website information for example being exchanged via an analog or digital speech modem in said terminal 7). Thereto, on the one hand coupler 210 is controlled in such a way that from coupler 210 a further data connection is set up via connection 63 to said website, and on the other hand processor 200 either changes certain parameters of said data connection and/or defining said data connection in such a way that said data connection is converted into a speech connection (said parameters for example defining said user being billed in dependence of an amount of data or in dependence of a lapsed amount of time) or instructs coupler 210 and/or terminal 7 to end/disconnect said data connection and to set up a speech connection for example from coupler 210 via connection 71 to terminal 7. Said ending of said data connection and said setting up of said speech connection could be done adjacent or with an overlap or with a "noman's-land" in time. Thereby, said data connection between switch 6 and terminal 7 could be a signalling channel or a signalling part of a speech/data channel used for data, and said speech connection between switch 6 and terminal 7 could be an other or the same speech/data channel now used for speech (whereby the term "speech/data channel" is to be regarded a "speech and/or data channel"). Then said user of terminal 7 may receive said website information via, inter alia, said speech connection.

According to a second alternative to said fourth embodiment, as described before, said vocal commander 230 is a name dialler for analysing said audio signal and in response generating a further telephone number defining a further terminal for making a further (wired and/or wireless) connection with a further (wired or wireless) terminal.

According to a third alternative to said fourth embodiment, preprocessing and final processing are used as described in the third embodiment.

All embodiments are just embodiments and do not exclude other embodiments not shown and/or described. All alternatives are just alternatives and do not exclude other alternatives not shown and/or described. Any two or more embodiments and any two or more alternatives and any two or more options and any combination of at least two of at least one embodiment and at least one alternative and at least one option can be combined into a new one (by for example allowing wireless terminal 1 to contact a website via vocal commander 23). This all without departing from the scope of the invention.

For example, in wireless terminal 1 (wired terminal 7) instead of said bus 17 (170) separate connections could be used, and in wireless switch 2 (switch 6), instead of said separate connections, a bus could be introduced.

Base stations 3,4,5 could each be provided with a coupler to introduce a switching function, and connections 31,41,51 may be based upon time multiplexing and/or frequency multiplexing.

All units disclosed in wireless switch 2 could be located into base station 3,4,5, or into switch 6 (and vice versa), or into a server coupled to a switch, or into a router or a bridge. Further, especially in wireless switch 2 (switch 6), many other configurations are possible, like for example final processing unit 24 (240) and connection converter 26 (260) being coupled to processor 20 (200) only (without connections 94 (940) and 96 (960) being present), and for example detector/selector 22 (220) and name dialler 23 (vocal commander 230) may have further functions like transparently connecting 92-94 (920-940) and 93-96 (930-960) etc., whereby detector/selector 22 (220) may even be left out. Further, especially in wireless switch 2 (switch 6), but not exclusively, buffers could be present, and/or could be integrated in said units.

Said signal converter 13 (130) and said preprocessing unit 14 (140) are shown (described) as separate units, but of course could be combined into a new single unit, whereby either said signal converter gets said preprocessing function, or said preprocessing unit gets said converting function.

Instead of a communication from wireless terminal 1 to terminal 7, other communications are possible, for example a communication from wireless terminal 1 via base station 4 and wireless switch 2 and via base station 3 or 5 to an other wireless terminal not shown in the drawing. Or said other wireless terminal not shown in the drawing is coupled to an other wireless switch not shown in the drawing and for example coupled to switch 6.

## Claims

1. Telecommunication system for performing vocal commanding and comprising a terminal for receiving an audio signal and a network coupled to said terminal via a connection, which network comprises a vocal commander for in response to said audio signal generating a command signal, **characterised in that** said connection is a data connection which is set up in response to a set up signal originating from said terminal, which comprises a signal converter for converting said audio signal into a data signal.

2. Telecommunication system according to claim 1, **characterised in that** said terminal comprises a generator for generating said set up signal in response to at least one of said audio signal and a manual signal.

3. Telecommunication system according to claim 2, **characterised in that** said network comprises a connection converter coupled to said vocal commander for converting said data connection into a speech connnection.

4. Telecommunication system according to claim 1, 2 or 3, **characterised in that** said signal converter in said terminal comprises a preprocessing unit for preprocessing said audio signal for generating a preprocessed signal, and in that said network comprises a final processing unit for final processing said preprocessed signal for generating a final processed signal.

5. Terminal for use in a telecommunication system for performing vocal commanding comprising said terminal for receiving an audio signal and a network coupled to said terminal via a connection, which network comprises a vocal commander for in response to said audio signal generating a command signal, **characterised in that** said connection is a data connection which is set up in response to a set up signal originating from said terminal, which comprises a signal converter for converting said audio signal into a data signal.

6. Terminal according to claim 5, **characterised in that** said terminal comprises a generator for generating said set up signal in response to at least one of said audio signal and a manual signal.

7. Terminal according to claim 5 or 6, **characterised in that** said signal converter in said terminal comprises a preprocessing unit for preprocessing said audio signal for generating a preprocessed signal, and in that said network comprises a final processing unit for final processing said preprocessed signal for generating a final processed signal.

8. Network comprising at least one of a collection of a base station and a wireless switching center and a switch and a server and a router and a bridge and for use in a telecommunication system for performing vocal commanding comprising a terminal for receiving an audio signal and said network coupled to said terminal via a connection, which network comprises a vocal commander for in response to said audio signal generating a command signal, **characterised in that** said connection is a data connection which is set up in response to a set up signal originating from said terminal, which comprises a signal converter for converting said audio signal into a data signal.

9. Network according to claim 8, **characterised in that** said network comprises a connection converter coupled to said vocal commander for converting said data connection into a speech connnection.

10. Network according to claim 8 or 9, **characterised in that** said converter in said terminal comprises a preprocessing unit for preprocessing said audio signal for generating a preprocessed signal, and in that said network comprises a final processing unit for final processing said preprocessed signal for generating a final processed signal.
